Europäisches Patentamt

European Patent Office

Office européen des brevets

(11) Numéro de publication: **0 345 312 B1**

(12) **FASCICULE DE BREVET EUROPEEN**

(45) Date de publication de fascicule du brevet: **05.05.93** (51) Int. Cl.⁵: **G02B 25/00**

(21) Numéro de dépôt: **88909770.5**

(22) Date de dépôt: **07.11.88**

(86) Numéro de dépôt internationale :
**PCT/FR88/00542**

(87) Numéro de publication internationale :
**WO 89/04503 (18.05.89 89/11)**

Le dossier contient des informations techniques
présentées postérieurement au dépôt de la
demande et ne figurant pas dans le présent
fascicule.

(54) **MONOCULAIRE PORTATIF AVEC UN FORT GROSSISSEMENT.**

(30) Priorité: **09.11.87 FR 8715500**

(43) Date de publication de la demande:
**13.12.89 Bulletin 89/50**

(45) Mention de la délivrance du brevet:
**05.05.93 Bulletin 93/18**

(84) Etats contractants désignés:
**AT BE CH DE GB IT LI LU NL SE**

(56) Documents cités:
**DE−C− 445 690**
**FR−A− 2 539 515**

**Applied Optics and Optical Engineering, R.
Kingslake, Academic Press New York and
London 1965.**

(73) Titulaire: **MORACCHINI, Alexandre
Ouerciolo
F− 20213 Castellare(FR)**

(72) Inventeur: **MORACCHINI, Alexandre
Ouerciolo
F− 20213 Castellare(FR)**

(74) Mandataire: **Hud, Robert
Cabinet COLLIGNON 6, rue de Madrid
F− 75008 Paris (FR)**

## Description

La présente invention concerne un dispositif monoculaire portatif qui, en fournissant un fort grossissement, est conçu pour permettre une observation de près.

Le dispositif monoculaire portatif selon l'invention, qui constitue un instrument d'optique léger et facilement transportable, est doté d'un fort grossissement (de l'ordre de 18) et permet, mieux qu'une forte loupe ou qu'un oculaire de joaillier (instruments trop courts et difficiles à accommoder à l'oeil) et sans en arriver à un dispositif binoculaire, d'observer des objets peu visibles à l'oeil nu et de se fixer sur un point précis à observer (par exemple sur une larve d'insecte en agriculture, pour procéder à son identification, à l'étude de son stade de développement, etc ... , et déterminer les meilleures époques de traitement).

Le document FR-A-2 539 515 divulgue un oculaire dont les éléments démontables, une fois différemment réassemblés, pourraient donner fortuitement un monoculaire présentant certaines des caractéristiques de l'invention.

Selon l'invention le dispositif comprend un logement allongé, ouvert à ses extrémités, sur une extrémité duquel est fixé un oeilleton et comportant intérieurement à son autre extrémité deux lentilles biconvexes qui sont de même puissance et qui sont disposées dans deux gorges parallèles ménagées à l'intérieur du support. La distance A entre les deux lentilles bi-convexes est déterminée par l'égalité $A = \frac{f1}{2}$ (f1 constituant la distance focale de la première lentille en partant de l'extrémité du support), cette distance A devant être inférieure ou égale au diamètre de ladite première lentille. La relation entre la distance A et la distance B séparent la seconde lentille et l'oeilleton est telle que $3A \leq B \leq 4A$.

Le dispositif monoculaire peut être réalisé (sauf les pièces optiques) en matière plastique ou autre matière légère, et il peut présenter une forme cylindrique ou toute autre forme convenable.

La présente invention sera mieux comprise à la lecture de la description ci-après d'un mode de réalisation préféré, en référence aux dessins schématiques annexés dans lesquels :

la figure 1 est une vue éclatée des principaux éléments constitutifs d'un dispositif monoculaire portatif selon l'invention,

la figure 2 est une coupe longitudinale du dispositif monté prise selon la ligne II-II de la figure 3, et

la figure 3 est une vue en coupe transversale du dispositif.

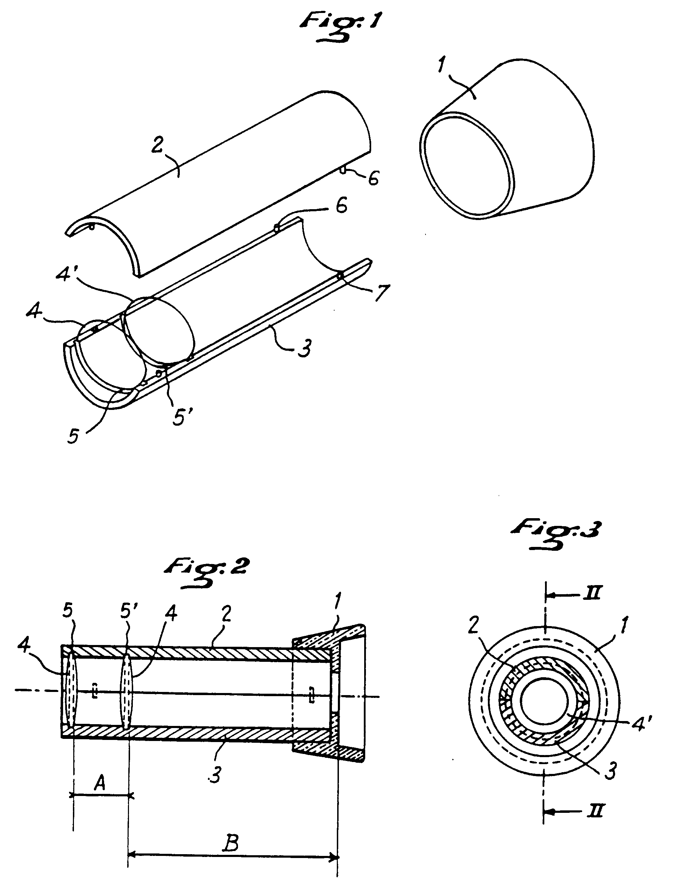

Le dispositif monoculaire représenté comprend un corps de forme cylindrique réalisé en matière plastique et constitué en deux parties 2, 3, avec deux encoches sphériques 5,5′ disposées, à une extrémité, sur sa face interne. Dans un exemple type, le corps cylindrique est d'une longueur de 67 mm, d'une ouverture de 17 mm et d'un diamètre de 22 mm. La première encoche 5 est située à 2 mm de l'ouverture du corps cylindrique et la deuxième encoche 5′ est à une distance A = 14 mm de la première encoche. Deux lentilles biconvexes 4,4′, chacune d'une puissance de 33 dioptries, et d'un diamètre de 18 mm, viennent s'insérer respectivement dans les encoches 5,5′. A l'opposé des lentilles 4,4′ un oeilleton 1 vient s'emmancher sur le corps cylindrique de telle façon qu'une distance B = 52 mm sépare l'oeilleton 1 de la lentille 4′. On précisera que la distance A = 14 mm a été choisie pour être moitié de la distance focale f de la lentille 4 et pour ne pas être supérieure au diamètre de cette lentille.

Le dispositif monoculaire a la particularité de pouvoir se démonter très rapidement. Il suffit à cet effet de désemboîter l'oeilleton 1 du corps cylindrique formé des éléments 2,3. Ces deux éléments sont fixés l'un à l'autre grâce à un système de fermeture mâle-femelle 6,7 (tout autre système approprié du même genre pourrait convenir).

Pour une meilleure tenue dans la main, le corps du dispositif monoculaire peut être pourvu de rainures sur sa face extérieure.

On comprendra que la description ci-dessus a été donnée à titre d'exemple, sans caractère limitatif, et que des adjonctions ou des modifications constructives pourraient y être apportées sans sortir du cadre de la présente invention.

## Revendications

1. Dispositif monoculaire portatif permettant une observation de près avec un fort grossissement, comprenant un corps allongé sur une extrémité duquel est fixé un oeilleton (1) et qui comporte intérieurement, à son autre extrémité, deux lentilles biconvexes (4,4'), caractérisé en ce que les deux lentilles biconvexes sont de même puissance et disposées respectivement dans deux gorges (5,5') aménagées à l'intérieur du corps, de telle façon que la distance A entre la première lentille (4), disposée à l'extrémité du corps, et la seconde lentille (4') est environ égale à la moitié de la distance focale de la première lentille (4) et est inférieure ou égale au diamètre de cette lentille (4), la relation entre la distance A et la distance B entre la seconde lentille (4') et l'oeilleton (1) étant telle que $3A \leq B \leq 4A$.

2. Dispositif selon la revendication 1, caractérisé en ce que le corps allongé a la forme d'un cylindre et est réalisé en deux parties (2, 3) semi – cylindriques assemblables.

3. Dispositif selon l'une quelconque des reven – dications précédentes, caractérisé en ce que ses pièces non optiques sont réalisées en une matière légère telle qu'une matière plastique.

## Claims

1. Portable monocular device which permits close – up observation with a strong magnifi – cation, comprising an elongate body on one end of which is fixed an eyepiece (1) and having two biconvex lenses (4, 4') internally at the other end, characterised in that the two biconvex lenses have the same power and are disposed respectively in two grooves (5, 5') arranged in the interior of the body in such a way that the distance A between the first lens (4) arranged at the end of the body and the second lens (4') is approximately equal to half the focal length of the first lens (4) and is less than or equal to the diameter of this lens (4), the relationship between the distance A and the distance B between the second lens (4') and the eyepiece (1) being such that $3A \leq B \leq 4A$.

2. Device as claimed in claim 1, characterised in that the elongate body is of cylindrical shape and is made from two semi – cylindrical parts (2, 3) which can be assembled.

3. Device as claimed in any one of the preceding claims, characterised in that the non – optical parts thereof are made from a light material such as a plastics material.

## Patentansprüche

1. Tragbare monokulare Vorrichtung zur Nahbe – obachtung mit einer starken Vergrößerung, die einen länglichen Körper umfaßt, an dessen einem Ende eine Okularblende (1) befestigt ist und der innen, am anderen Ende, zwei bikon – vexe Linsen (4,4') enthält, dadurch gekenn – zeichnet, daß die beiden bikonvexen Linsen gleich stark und jeweils in zwei im Körperin – nern eingearbeiteten Auskehlungen (5,5') so angeordnet sind, daß der Abstand A zwischen der ersten, am Ende des Körpers angeordne – ten Linse (4) und der zweiten Linse (4') etwa gleich der Hälfte der Brennweite der ersten Linse (4) und kleiner als der Durchmesser dieser Linse (4) oder mit diesem gleich ist, das Verhältnis zwischen dem Abstand A und dem Abstand B zwischen der zweiten Linse (4') und der Okularblende (1) ist wie $3A \leq B \leq 4A$.

2. Vorrichtung nach Anspruch 1, dadurch ge – kennzeichnet, daß der längliche Körper die Form eines Zylinders hat und in zwei zusam – menbaubaren halbzylindrischen Teilen (2, 3) hergestellt ist.

3. Vorrichtung nach einem der vorherigen An – sprüche, dadurch gekennzeichnet, daß ihre nichtoptischen Teile aus einem Leichtmaterial wie Kunststoff hergestellt sind.

_Fig:1_

_Fig:2_

_Fig:3_